Europäisches Patentamt

European Patent Office

Office européen des brevets

(19)

(11) Publication number: 0 097 624
A1

# EUROPEAN PATENT APPLICATION

(12)

(21) Application number: 83830069.7

(22) Date of filing: 29.03.83

(51) Int. Cl.³: **B 26 D 1/143**
**B 26 D 7/06, A 22 C 25/18**

(30) Priority: 17.06.82 IT 2191482

(43) Date of publication of application:
04.01.84 Bulletin 84/1

(84) Designated Contracting States:
AT BE CH DE FR GB LI LU NL SE

(71) Applicant: VICTOR SLICING SYSTEMS S.r.l.
Via Verdi, 15
I-20017 Rho (Milan)(IT)

(72) Inventor: Belloni, Paolo
Via I Maggio, 23
I-20017 RHO Milan(IT)

(74) Representative: Vannini, Torquato et al,
JACOBACCI-CASETTA & PERANI S.p.A. 7 Via Visconti di
Modrone
I-20122 Milan(IT)

(54) Slicing machine.

(57) A slicing machine (1) suitable for the automatic slicing of smoked salmon (2) enables the salmon (2) to be sliced along the whole of its length, effectively allowing its complete utilisation. The slicing machine includes a feed plate (4) for the salmon (2) formed by a plurality of powered screws arranged side-by-side, a blade-carrier head (5) having a blade (6) at an angle to the feed plane (4) and converging therewith at a cutting station (7), and a presser (46) in the angle for keeping the salmon (2) pressed against the screws. The presser (46) is guided for movement towards and away from the cutting station (7) in a direction substantially parallel to the blade (6) by a parallelogram linkage (18).

FIG. 2

EP 0 097 624 A1

## Slicing Machine

The present invention relates to a slicing machine, particularly but not exclusively for slicing smoked salmon, of the type comprising a support frame with a feed plane for a product to be sliced, and a blade-carrier having a blade at an angle to the feed plane and conver- -ging therewith at a cutting station.

It is known that smoked salmon, which is a very expensive food specialty and highly-appreciated gastronomically, is at present usually sliced by hand for immediate consumption; however, when one is considering the industrial packaging of smoked salmon intended to be kept for deferred consumption and wrapped, for example, in transparent plastics bags, manual slicing of the salmon is exceedingly uneconomic. On the other hand, automatic slicing by slicing machines of the prior art has the disadvantage of a great wastage of the product.

It is unfortunate indeed that the known slicing machines do not allow the narrow-sectioned end portion of the product to be sliced in a satisfactory and regulable manner; this portion must, in fact, be discarded.

This disadvantage, which is tolerated in the case of ordinary sausage products and is almost unnoticeable in sausage products which have been treated in a mould so as to be almost cylindrical, becomes unacceptable in the case of the smoked salmon which has its own typical unalterable shape in which the narrow-sectioned end portion, corresponding to the tail portion of the fish, has a length which is anything but negligible. Obviously, the impossibility of using these portions to obtain the desired slices of salmon is harmful financially, and leads to the hinderance and slowing down of production.

The technical problem behind the present invention is that of devising a slicing machine of the type specified, which has structural and functional characteristics such as to permit the slicing of smoked salmon while, at the same time, overcoming the aforementioned disadvantage of the prior art.

According to the present invention, this problem is solved by a slicing machine of the aforesaid type, including a presser for keeping the product to be sliced pressed against the plane, which is supported by the frame in the angle between the blade and the plane and is guided for movement towards and away from the cutting station in a direction substantially parallel to the blade.

Preferably, the feed plane is formed by a plurality of screws arranged alongside each other and subject to the action of drive means.

A preferred embodiment of a slicing machine according to the present invention will now be described, by way of non-limiting example, with reference to the appended drawings, in which:

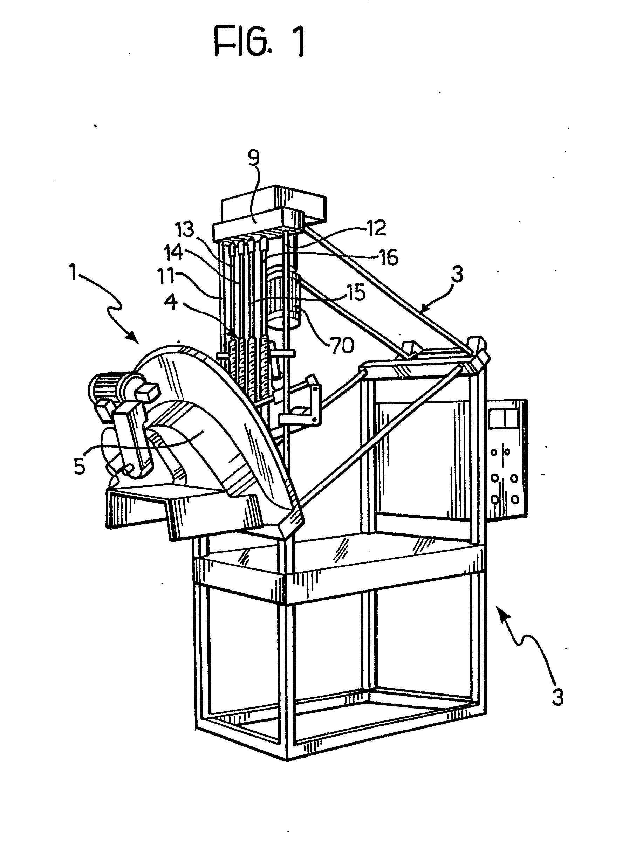

Figure 1 is a perspective view of  a slicing machine according to the invention;

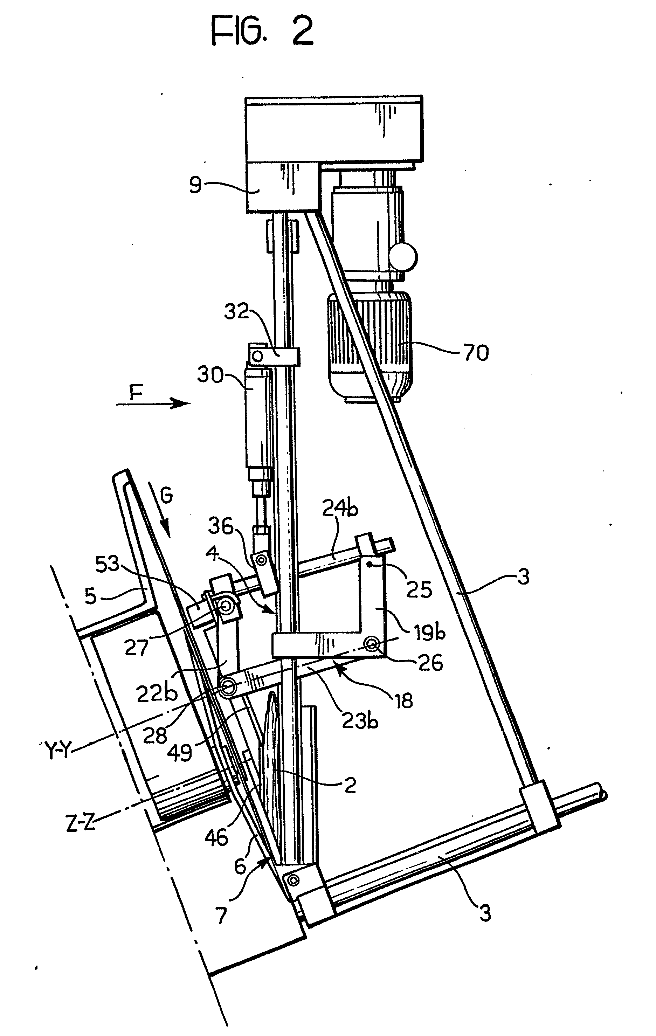

Figure 2 is a side view of a detail of the slicing machine of Figure 1;

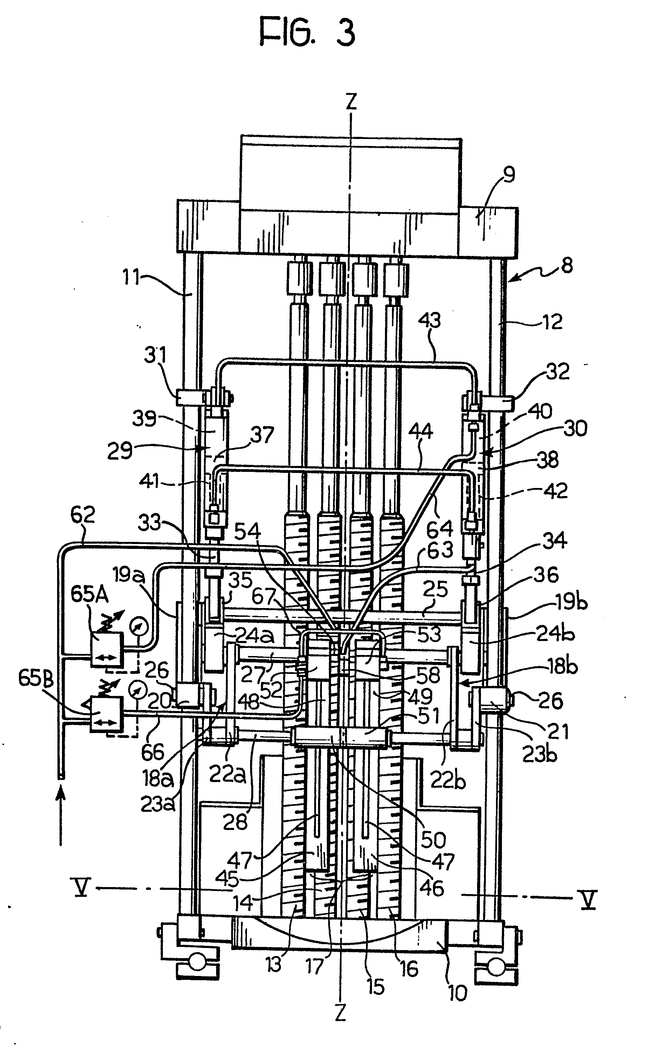

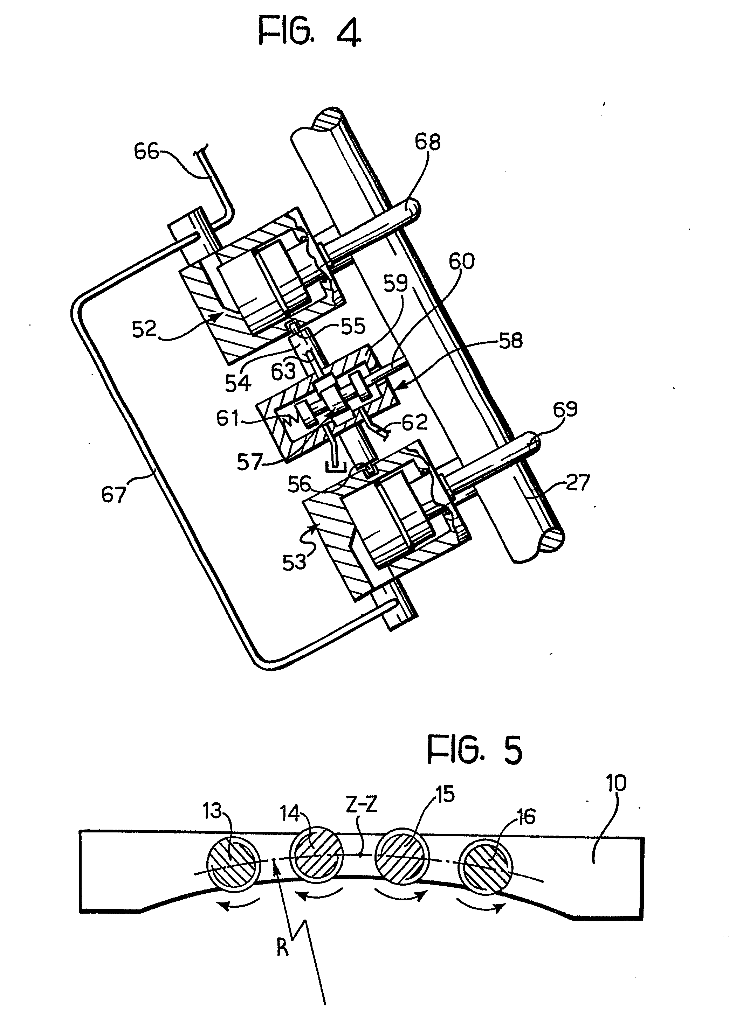

Figures 3 and 4 are views of details of the machine of Figure 2 taken in the directions of arrows F and G, respectively, and

Figure 5 is a view of a detail of the machine of Figure 2 taken on the line V-V.

With reference to the appended drawings, a slicing machine according to the invention, generally indicated 1, is intended to slice a smoked salmon 2.

The slicing machine 1 includes a support frame 3 which supports a feed plane 4 for the smoked salmon and a blade-carrier head 5 provided with a blade 6 which, in its turn, forms an angle of about $20^{\circ}$ with the feed plane 4 and converges with the plane 4 at a cutting station 7. More particularly, the blade 6 is of the circular type and is rotatable about an axis X-X which, in turn, orbits an axis Y-Y parallel to the axis X-X.

The feed plane 4 is substantially vertical and includes a rectangular frame 8 fixed to the support frame 3 and extending upwardly. An upper cross member 9 and a lower cross member 10 form the smaller sides of the frame 8, while two tubular pillars 11, 12 form the larger sides of the frame.

The feed plane 4 also includes four mutually parallel screws 13, 14, 15, 16 which are alongside each other, parallel to the tubular pillars 11, 12, and supported for rotation at their ends by the lower and upper cross members 9, 10. More particularly, the screws 13, 14, 15, 16 are disposed symmetrically about a common vertical centre line Z-Z of the frame 8. The salmon 2 is disposed with its tail portion at the top and with its flat surface in contact with the screws 13, 14, 15, 16. The diameter of the screws and the distance between their axes is chosen so that together they form the feed plane for the salmon. To advantage, the screws have their axes located on a cylindrical surface with a radius of curvature R substantially reproducing the average transverse curvature of the salmon to be sliced.

The screws 13, 14, 15, 16 are rotated by conventional drive means, generally indicated 70. More particularly, the screws 13, 14 on one side of the centre line Z-Z have opposite senses of rotation to the screws 15, 16 on the other side of the centre line Z-Z. The senses of rotation of the screws are chosen so that the peripheral velocities of the parts of the screws in contact with the salmon are directed away from the common centre line Z-Z.

In order that the rotation of the screws 13, 14, 15, 16 with which the salmon is in contact can cause the desired feeding of the salmon itself towards the cutting station 7, the screws 13, 14 have a left-hand thread and the screws 15, 16 a right-hand thread.

For an effective grip of the screws on the salmon, the screw threads have a triangular section in the form of a right-angled triangle the height of which is equal to about a third of the pitch of the threads.

The aforementioned screws have their lower ends extending across almost the entire cutting station, so as to allow the salmon to be fed to the cutting station even when it is reduced to one of its small end portions.

In order to keep the salmon 2 to be sliced pressed against the screws 13, 14, 15, 16, the slicing machine 1 includes a presser, generally indicated 17, supported by the support frame 3 in the angle between the blade 6 and the plane 4. The presser 17 is guided for movement towards and away from the cutting station 7 in a direction substantially parallel to the blade 6.

More particularly, the presser 17 is supported by the pillars 11, 12 of the frame 8 which is itself fixed to the support frame 3, by means of an articulated parallelogram structure 18 divided into two similar parallelogram linkages 18a, 18b each located in correspondence with a respective pillar 11, 12.

The parallelogram linkage 18a (18b) has its fixed side 19a, (19b) attached to the pillar 11 (12) by a right-angled lug 20 (21), and its opposite, movable side 22a (22b) connected thereto by means of connecting rods 23a, 24a (23b, 24b).

The fixed sides 19a, 19b and the opposite movable sides 22a, 22b are vertical and parallel to the screws 13, 14, 15, 16.

The connecting rods 23a, 24a, 23b, 24b are elongate, of fixed length, and are substantially perpendicular to the blade 6 when the presser 17 is in its average working position, so that the presser 17 follows an arcuate path practically the same as a straight path parallel to the blade 6.

The two parallelogram linkages 18a, 18b are connected together by shafts 25, 26, 27, 28 constituting the pivot axes of the parallelogram structure 18. In particular, the shafts 25, 26 constitute respectively the axes of the upper and lower fixed pivots, while the shafts 27, 28 constitute respectively the axes of the upper and lower movable pivots.

Two identical fluid cylinders 29, 30 for operating the parallelogram structure have substantially vertical axes and extend in correspondence with the pillars 11, 12; more particularly, they are intended to operate the respective parallelogram linkages 18a, 18b in parallel.

The cylinder 29 (30) has one end anchored by an eyelet to a clamp 31 (32) fixed to the pillar 11 (12) and has the end of its rod 33 (34) anchored by an eyelet to a clamp 35 (36) located at an intermediate point on the connecting rod 24a (24b). Within the cylinder 29 (30), the piston 37 (38) lies between an upper larger-section chamber 39 (40) and a lower smaller-section chamber 41 (42). The chambers 39, 40 and the chambers 41, 42 are in fluid communication with each other through respective connecting tubes 43, 44.

The presser 17 is formed by two flat, elongate plates 45, 46, which are side-by-side and in contact with the salmon 2 to be sliced.

The two plates 45, 46 constitute the ends of respective rod-shaped members 48, 49 provided with stiffening ribs 47. The rod-shaped members 48, 49 are provided at intermediate points with respective sleeves 50, 51 which are freely rotatable on the shaft 28.

At their opposite ends, the rod-shaped members 48, 49 have respective fluid cylinders 52, 53 which have active contact ends which exert a predetermined adjustable force on the shaft 27. The degree of this force is chosen in accordance with a desired force which each plate 45, 46 is to exert against the salmon to be sliced so as to keep it pressed against the screws 13, 14, 15, 16.

The said opposite ends of the rod-shaped members 48, 49 are connected together by a lever 54 extending substantially parallel to the shafts 25, 26, 27, 28 and have respective ends 55, 56 pivoted to the bodies of the fluid cylinders 52, 53.

By virtue of the angular movement of the rod-shaped members 48, 49 about the shaft 28, the plates 45, 46 forming the presser 17 can effect small displacements towards and away from the feed plane 4.

The intermediate point 57 on the lever 54 consequently effects a small displacement which is half the small displacements of the plates 45, 46.

At the intermediate point 57, the lever 54 is provided with a valve 58 for controlling the fluid for the cylinders 29, 30. In particular, the valve 58 has a body 59 fixed to the lever 57 and a distributor 60 maintained in contact with the shaft 27 by a spring 61.

Thus, the valve 58 is located between the presser 17 and the articulated parallelogram structure 18, and is controlled by the small displacements of the intermediate point 57 of the lever 54, which are half the small displacements of the plates 45, 46 forming the presser 17.

The valve 58, which is of conventional type, is connected by means of a tube 62 to a source (not shown in the drawings) of fluid at a predetermined pressure, and is also connected to a drain and, through a tube 63, to the small-section chamber 42 of the cylinder 30.

The pressure existing in the tube 63, and hence in the small-section chamber 42 of the cylinder 30 and also in the chamber 41 of the cylinder 29, is a function of the position of the distributor 60 in the valve 58 relative to the body 59.

The large-section chambers 39, 40 of the cylinders 29, 30 are connected by a tube 64 to the pressurized fluid source and are maintained at a predetermined pressure by a pressure-regulating valve 65A located in the tube 64.

The cylinders 52, 53 are connected by tubes 66, 67 to the pressurized fluid source and are maintained at a predetermined pressure by a pressure-regulating valve 65B located in the tube 66.

Respective brackets 68, 69 are mounted at the ends of the rod-shaped members 48, 49 in correspondence with the bodies of the cylinders 52, 53: these brackets 68, 69 surround the shaft 27 with limited clearance to allow small angular displacements of the rod-shaped members 48, 49 about the shaft 28.

The operation of the slicing machine according to the invention is described below with reference to an initial condition, shown in the drawings, in which the maximum-section portion of the salmon 2 is at the cutting station.

As the salmon moves downwardly under its own weight and at the feed velocity imposed by the speed of rotation of the screws 13, 14, 15, 16, the narrow tail portion is introduced between the presser 17 and the screws 13, 14, 15, 16.

Under the action of the cylinders 52, 53, the plates 45, 46 forming the presser 17 effect a small angular displacement which brings them closer to the screws 13, 14, 15, 16.

By virtue of this small displacement, the body 59 of the valve 58 moves away from the pivot axis 27 and moves relative to the distributor 60, causing a reduction in the supply pressure to the cylinders 29, 30 which operate the parallelogram linkages 18a, 18b, so as to displace the presser 17 towards the cutting station 7 in a direction substantially parallel to the plane of the blade 6 until a new equilibrium condition is reached in which the presser 17, still keeping the salmon 2 pressed against the screws, is simultaneously displaced by a certain distance towards the cutting station 7 in accordance with the reduction in the thickness of the salmon to be sliced.

As the tail portion becomes thinner, the presser 17 gradually moves towards the cutting station, still keeping the salmon pressed against the screws.

Thus, the salmon can be cut into slices right to the end.

In particular, during the cutting, the adjacent plates 45, 46 are brought against the salmon independently of each other in accordance with its transverse shape, each being subject to the force of the respective cylinder to exert the desired pressure on the salmon.

When another salmon is to be sliced, it suffices to move the presser 17 away from the screws; this causes the angular displacement of the rod-shaped members in the opposite sense to that above and thereby brings the body 59 of the valve 58 closer to the shaft 27.

Because of this, there is a corresponding relative movement between the body 59 and the distributor 60, causing an increase in the supply pressure to the small-section chambers of the cylinders 29, 30.

The pressure in the small-section chambers now prevails, whereby the articulated parallelogram structure is moved progressively towards an initial position in which the presser 17 is at its maximum distance from the cutting station 7.

From what has been described above, the advantage achieved by the slicer according to the present invention is clear; indeed, this slicer allows the automatic and complete slicing of the smoked salmon up to its narrow tail portion, completely eliminating any waste.

Claims:

1. Slicing machine (1) of the type comprising a support frame (3) with a feed plane (4) for a product (2) to be sliced and a blade-carrier head (5) having a blade (6) at an angle to the feed plane (4) and converging therewith at a cutting station (7), characterised in that it includes a presser (17) for keeping the product (2) pressed against the feed plane (4), the presser (17) being supported by the frame (3) in the angle between the blade (6) and the plane (4) and being guided for movement towards and away from the cutting station (7) in a direction substantially parallel to the blade (6).

2. A slicing machine according to Claim 1, characterised in that the presser (17) is supported by the frame (3) by means of an articulated parallelogram structure (18).

3. A slicing machine according to Claim 2, characterised in that the presser (17) is mounted on the articulated parallelogram structure (18) so as to be movable by small displacements towards and away from the feed plane (4), and in that the presser (17) includes at least one fluid cylinder (29, 30) for operating the articulated parallelogram structure (18), and a fluid control valve (65A) for said at least one cylinder (29, 30), located between the presser (17) and the parallelogram structure (18) and controlled by the small displacements.

4. A slicing machine according to Claim 1, characterised in that the feed plane (4) is formed by a plurality of screws (13, 14, 15, 16) arranged alongside each other and subjected to the action of drive means (70).

5. A slicing machine according to Claim 4, characterised in that there is an even number of screws (13, 14, 15, 16) and the screws (13, 14; 15, 16) on opposite sides of a common centre line (Z-Z) rotate in opposite senses.

6. A slicing machine according to Claim 5, characterised in that the senses of rotation of the screws (13, 14, 15, 16) are such that their parts in contact with the product (2) rotate away from the centre line (Z-Z).

FIG. 1

# FIG. 2

# FIG. 3

FIG. 4

66
68
52
59
60
58
54
63
55
61
57
62
67
56
69
53
27

FIG. 5

13
14
Z-Z
15
16
10
R

| DOCUMENTS CONSIDERED TO BE RELEVANT | | | EP 83830069.7 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | FR - A1 - 2 395 707 (SAUMON P.C.)<br>* Page 6, lines 13-31; page 10, lines 6-40; claims 7,8,9; Fig. 2,5a,5b * | 1 | B 26 D 1/143<br>B 26 D 7/06<br>A 22 C 25/18 |
| A | GB - A - 1 560 877 (CAVIER & MAASS)<br>* Totality * | | |
| A | FR - A2 - 2 446 600 (SAUMON P.C.)<br>* Totality * | | |
| A | GB - A - 708 211 (BERKEL & PARNALLS SLICING MACHINE MANUFACTURING COM-PANY LIMITED)<br>* Totality * | | |
| | | | **TECHNICAL FIELDS SEARCHED (Int. Cl. ³)**<br><br>B 26 D 1/00<br>B 26 D 7/00<br>A 22 C 25/00 |

The present search report has been drawn up for all claims

| Place of search | Date of completion of the search | Examiner |
|---|---|---|
| VIENNA | 13-09-1983 | MANLIK |